(19) **Europäisches Patentamt / European Patent Office / Office européen des brevets**

(11) **EP 3 035 758 B1**

(12) **EUROPEAN PATENT SPECIFICATION**

(45) Date of publication and mention
of the grant of the patent:
**18.11.2020 Bulletin 2020/47**

(51) Int Cl.:
***H04W 72/12*** *(2009.01)*

(21) Application number: **14307030.8**

(22) Date of filing: **15.12.2014**

(54) **COEXISTENCE OF CELLULAR AND NON-CELLULAR SYSTEMS**

KOEXISTENZ VON ZELLULAREN UND NICHTZELLULAREN SYSTEMEN

COEXISTENCE DE SYSTÈMES CELLULAIRES ET NON CELLULAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.06.2016 Bulletin 2016/25**

(73) Proprietor: **Alcatel Lucent
91620 Nozay (FR)**

(72) Inventors:
• **Lopez-Perez, David
Dublin, 15 (IE)**
• **Claussen, Holger
Dublin, 15 (IE)**
• **Ho, Lester Tse We
Dublin, 15 (IE)**

(74) Representative: **Hepworth Browne
15 St. Pauls Street
Leeds LS1 2JG (GB)**

(56) References cited:
**WO-A2-2015/047777    US-A1- 2013 201 884
US-A1- 2013 208 587**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The invention relates to the field of wireless communication and in particular, to communication in areas where both cellular and non-cellular nodes transmit in the same frequency bandwidth.

BACKGROUND

As wireless communication traffic increases, there is a need to increase ability of systems to handle that traffic if a positive user experience is to be maintained. Ways to increase that ability include: increasing bandwidth provided for handling communication signals. Currently cellular communications are generally transmitted within a licensed bandwidth, the network operators paying large sums of money for their portion of this bandwidth. Higher frequencies are not subject to licenses but at these higher frequencies path losses increase and transmission distances decrease correspondingly, making those unlicensed portions of bandwidth unattractive for cellular communication.

One unlicensed bandwidth that has a frequency that is not much higher than the licensed bands is used by Wi-Fi systems. Use of this additional bandwidth by a cellular base station providing radio coverage within a cell of the cellular network could increase the capacity of that base station but problems of collision between the signals from the cellular base station and the Wi-Fi access points might arise.

In this regard, cellular networks transmit signals using scheduling and OFDMA, (orthogonal frequency division multiple access) so that signals to multiple users can be transmitted and collision between these signals avoided or at least reduced. Wi-Fi systems use CSMA (carrier sense multiple access) to reduce collisions, so that prior to transmitting data they sense to determine if the frequency band is currently being used or not. That is to say, cellular systems are typically scheduled and controlled, whilst communication in a Wi-Fi system is typically contention-based.

One problem that might arise is that due to the Wi-Fi listening before transmitting, any interference from a cellular base station in the required frequency band may result in the Wi-Fi network operating in such a manner that it has very little access to the shared communication channel.

It would be desirable for cellular base stations and non-cellular communication access points to be able to share the use of the same frequency band for communication, without one of the technologies having an undue proportion of the resources. US2013/0201884 discloses a method for coexistence among user equipment operating in the same spectrum. Coexistence between different base stations and WiFi access points is made possible by the use of coexistence gap patterns, each UE (WTRU) storing a number of coexistence gap patterns. On attaching to a network a UE receives information from a base station regarding its duty cycle and selects one of the gap patterns in response to this. Sensing of other signals may then be performed by the UE during the gaps and information is exchanged between the UE and the base station. The duty cycle may then be updated and the UE may select another pattern in response to the updated duty cycle.

US2013/208587 discloses the use of coexistence gaps in one RAT to allow coexistence with another RAT. It also indicates that the ON/OFF duty cycle can be calculated based on traffic conditions.

SUMMARY

A first aspect of the present invention is embodied in the independent claim 1 and consists in a method performed at a base station providing radio coverage within a cell of a cellular wireless communication network, said method comprising: prior to scheduling cellular traffic within a frequency band used by at least one access point located within said cell and supporting non-cellular wireless communication, determining an indication of operational characteristics of said at least one access point within said cell; assessing, based on a comparison of said determined operational characteristics of said at least one access point within said cell with operational characteristics of said base station providing said radio coverage within said cell, a proportion of time that said frequency band may be used by said base station; scheduling transmission of said cellular traffic in said frequency band in accordance with said assessed proportion of time; and calculating, from said determined operational characteristics of said at least one access point within said cell, an indication of proximity of said at least one access point to said base station; and scheduling uplink cellular traffic in said frequency band from user equipment assessed to be closer to said base station than said calculated indication of proximity.

A second aspect provides a computer program embodied in the independent claim 13, operable, when executed on a computer, to perform the method of the first aspect.

A third aspect provides a base station configured to provide radio coverage within a cell of a cellular wireless communication network and it is embodied in the independent claim 14.

Further particular and preferred aspects are set out in the accompanying independent and dependent claims.

Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates schematically an example LTE and Wi-Fi co-existence scenario;
Figure 2 illustrates schematically an example of an LTE node "sniffing" Wi-Fi frames;
Figure 3 illustrates schematically an example Wi-Fi frame format;
Figure 4 illustrates schematically in more detail a Wi-Fi frame format;
Figure 5 illustrates schematically one possible arrangement to share common channel time between an LTE network and a Wi-Fi network in which transmitting time of each network is proportional to associated network traffic load;
Figure 6 illustrates schematically an arrangement in which uplink (UL) sub-frames are scheduled to LTE user equipment (UEs) close to a LTE node to allow transmissions made by Wi-Fi nodes; and
Figure 7 illustrates schematically a method of estimating a percentage of time Wi-Fi nodes occupy a shared channel by monitoring received power measurements at a LTE node.

DESCRIPTION

Before discussing in any more detail, first an overview will be provided.

When LTE and Wi-Fi nodes are deployed in the same frequency band, Wi-Fi nodes tend to stay in listening mode when receiving interference from the LTE network, waiting for a channel access opportunity. Simulation results have shown that, when coexisting with LTE nodes, Wi-Fi nodes in a typical indoor scenario spend at least 96% of the time in listening mode due to inter-RAT (radio access technology) interference. This significantly degrades Wi-Fi performance.

In this regard, cellular networks such as LTE (long term evolution) networks provide user equipment UE with radio coverage in cells using network nodes or base stations. User equipment moving between cells will have its connection to the network transferred to a new base station. Various techniques have been devised to reduce interference between signals transmitted to different devices within the cell such as intelligent scheduling of signals to the different devices by the base stations and the use of frequency division multiplexing of the signals.

Wireless communication using non-cellular networks where access points such as Wi-Fi nodes provide radio coverage to user equipment use different techniques to cellular networks to reduce interference. These access points use listening before transmitting methods to detect whether a frequency band or channel that they wish to use is currently available prior to transmitting a signal in this band. Thus, the avoidance of signal collision is handled differently in these two different technologies.

The coexistence of cellular base stations that use the same frequency band as non-cellular access points can therefore lead to collision unless compatible collision avoidance techniques are used.

Different solutions have been proposed to enhance LTE and Wi-Fi coexistence. These methods mostly rely on sacrificing some resources at the LTE network in order to mitigate the LTE interference to the Wi-Fi network, and then allow Wi-Fi transmissions.

Two proposed example solutions to the problem are:

Solution based on LTE blank subframes: In this example, a modified version of ABS (almost blank subframes) is proposed to allow Wi-Fi coexistence. This modified version does not include reference signals, which results in a silent subframe. Since this modification is meant for new frequency bands, it is assumed that reference signals are not required for legacy support. During silent subframes, referred to here as blank subframes, Wi-Fi nodes detect channel vacancy as channel energy is below the threshold, and therefore are able to transmit. This way, LTE dominance over the available spectrum is reduced. The disadvantage for LTE networks is the loss of time resources, which inevitably decreases the throughput per user.

Solution based on UL power control: In this example, the use of LTE UL (uplink) power control to improve LTE and Wi-Fi coexistence is proposed. With the introduction of an additional factor to the conventional LTE UL power control, a controlled decrease of LTE UL transmit power is performed based on interference measurements, and this provides opportunity for Wi-Fi transmissions. The proposed LTE UL power control with interference aware power operating point is a flexible tool to deal with the trade-off between LTE and Wi-Fi performances, since it is able to set different LTE and Wi-Fi coexistence configurations with the choice of a single parameter. Simulation results show that the proposed approach can provide similar or better performance for both LTE and Wi-Fi networks than the previously proposed interference avoidance mechanism.

It is desired to allow LTE-U and Wi-Fi to coexist using a common frequency band, to increase spatial reuse of the available frequency spectrum, whilst allowing that coexistence to occur "fairly" by sharing available frequency spectrum.

Aspects and embodiments described herein operate to enhance cellular, for example, LTE, network and non-cellular, for example, Wi-Fi, network coexistence according to a method which, in general, can be divided in three conceptual stages: a cellular base station learning about the operational parameters of a co-existing Wi-Fi network; that base station determining a "fair" proportion of time to use shared resource, based on said determined operational parameters of the co-existing Wi-Fi network; and then taking steps to use the shared resource in a manner which is in accordance with the determined fair proportion. That is to say, methods described can utilise the relative intelligence of a cellular network control node to implement a sharing system which is fair to both cellular and non-cellular network nodes.

Some embodiments recognise that within a cellular network (for example, LTE), transmissions in uplink (UL) subframes typically result in much lower interference to neighboring nodes than cellular (for example, LTE) downlink (DL) subframes. This is because LTE UL transmissions are typically power controlled. Therefore, user equipment which are closer to the LTE base station, and thus have a lower path loss to it, are likely to make transmissions at a low power level. Therefore, in some embodiments, appropriate smart scheduling of LTE UL subframes can be used as mechanism to enhance co-existence.

Taking now one possible arrangement, comprising an LTE cellular network and a Wi-Fi network: Assuming that LTE nodes operate in a semi-dynamic or a dynamic TDD manner, the basic ideas of the three stages of the proposed method can be described as follows:

1. A LTE node is configured to learn operational parameters of a surrounding Wi-Fi network. Those operational parameters may, for example, include: the number of neighbouring Wi-Fi nodes and/or the number of UEs associated with each one of those neighbouring Wi-Fi nodes, together with other traffic characteristics (length and rate of transmitted frames). The LTE node may, for example, be configured to learn about the surrounding Wi-Fi network by decoding Wi-Fi frames and reading the Wi-Fi frame headers. In order to do that, in one embodiment, a Wi-Fi receiver is provided at the LTE node. Measurement reports received from UEs with Wi-Fi capabilities operating within the networks could also be used for this purpose, if such measurement reports were, for example, standardized in format.

2. The LTE node may be configured to process the received information and calculate or otherwise determine an indication of Wi-Fi network short-term average traffic load. The LTE node may also be operable to derive the same information in relation to its own DL and UL LTE traffic. An appropriate "fair" sharing time between LTE and Wi-Fi transmissions can then be computed, according to the respective determined traffic loads.

3. The LTE base station node, operating in a semi-static or dynamic TDD manner, selects a DL to UL subframe ratio according to the computed fair sharing time. That fair sharing time may take into account DL and UL LTE traffic and the amount of help that the LTE base station node can offer to neighbouring Wi-Fi nodes.

To this end, embodiments employ listening techniques at a cellular base station such that the shared frequency band is monitored prior to the base station transmitting signals on it. According to some embodiments, if signals are detected within the shared frequency band, the cellular base station may be operable to either: transmit signals at a reduced power so as not to interfere with transmission by neighbouring devices transmitting on the non-cellular network, or it will indicate to the non-cellular devices, at a suitable time, that it is currently using, or intends to use the frequency band. In this regard, since the cellular base station monitors the use of the frequency band it can control its use of that shared frequency band and therefore control the degradation of the non-cellular performance that its use may cause.

A method in accordance with some arrangements may run independently at each LTE-U (long term evolution unlicensed spectrum) node, and primarily operates to try to ensure available resource is shared fairly between the cellular and non-cellular network. Methods described recognise that an excessive exponential back-off at a Wi-Fi node may result in a Wi-Fi node being unable to take any advantage of the potential scheduling opportunities provided by the LTE-U network to the Wi-Fi network in the short term. Therefore, LTE-U nodes can transmit when Wi-Fi nodes are not transmitting to avoid exponential back-off at the Wi-Fi nodes and allow a reactive system in which Wi-Fi nodes may be able to benefit from appropriate transmission opportunities. If a collision occurs when a Wi-Fi node is transmitting, it will back off and will not transmit, or sense the band, again for a certain time. If a collision occurs repeatedly, back-off time at a Wi-Fi node increases in an exponential fashion, which has a dramatic effect on the operational performance of the Wi-Fi network.

One possible arrangement is described in more detail below:

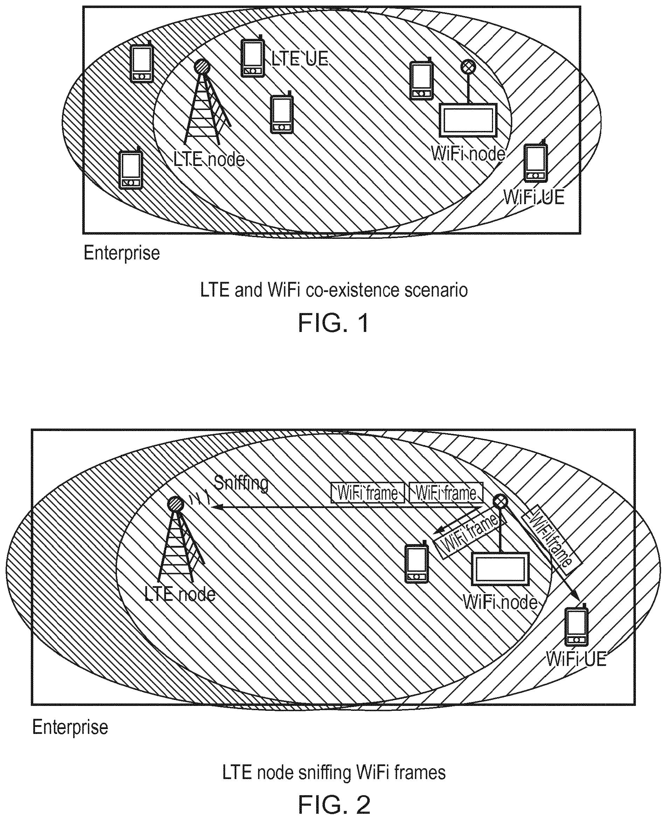

Figure 1 illustrates schematically a network deployment comprising 1 LTE and 1 Wi-Fi access node in an enterprise environment. Those two nodes reuse the same frequency band and are located in different geographical positions within the enterprise, but have a region of overlapping coverage. In the arrangement shown in Figure 1, the LTE node is serving 4 UEs and the Wi-Fi node is serving 2 UEs. Each UE has associated DL and UL traffic and the resulting packets are stored in their respective DL and UL traffic buffers.

Using the scenario shown schematically in Figure 1, the different stages of one approach can be described as follows:

## LTE node learning stage

Carrier sensing and collision avoidance are the techniques used to improve the performance of CSMA in Wi-Fi networks. Prior to transmitting, a Wi-Fi node is operable to first listen to a shared channel to determine whether another Wi-Fi node is transmitting or not (carrier sensing). If another Wi-Fi node is heard, the listening Wi-Fi node waits for a period of time for the other Wi-Fi node to stop transmitting, before listening again for a free communication channel (collision avoidance).

As part of the carrier sensing process, a Wi-Fi node typically has the ability to detect and decode Wi-Fi frames. Such Wi-Fi frames include a PLCP header. The PLCP header contains information relating to the rate and length of the rest of the frame. From the PLCP header, the time duration (in $\mu$s) for which the channel will be occupied can also be inferred. When such information is decoded, a carrier sensing flag is held busy at the detecting node until the end of data transmission.

In accordance with one arrangement, an LTE control node (base station) is operable to the MAC header of the Wi-Fi frames, in the the same way as a Wi-Fi node typically decodes a PLCP header. Accordingly, in one arrangement, the LTE base station operates to decode the MAC header in order to obtain a MAC address of the Wi-Fi transmitter and receiver, together with BSSID information. Due to the carrier sensing mechanism within Wi-Fi networks, the PLCP and MAC headers need to be decoded by all Wi-Fi nodes, whether they are associated (transmit-receive) with each other or not, so no authentication is required between the Wi-Fi and LTE nodes in order for that information to be available to the LTE base station node.

Figure 2 illustrates schematically a sniffing process such as that described above in relation to Figure 1. Based on such WiFi sniffing/decoding capability, an LTE node equipped, for example, with a Wi-Fi receiver may be operable to learn the number of distinct Wi-Fi nodes in its neighborhood, W, and the number of Wi-Fi UEs associated with each one of those Wi-Fi nodes, $U_w^{\text{WIFI}}$, together with some other traffic characteristics (for example, rate and length of the packets, and similar).

The LTE base station may stop any transmission on the unlicensed common frequency band to get reliable statistics from its Wi-Fi sniffing capability. The statistics obtained can be used by the LTE node to get accurate estimation of the traffic load in each neighbouring Wi-Fi node. During the learning period an LTE node may be operable to serve its UEs on the licensed (not shared) frequency band and start moving operation of UEs into the unlicensed shared band once the information on the Wi-Fi nodes has been obtained.

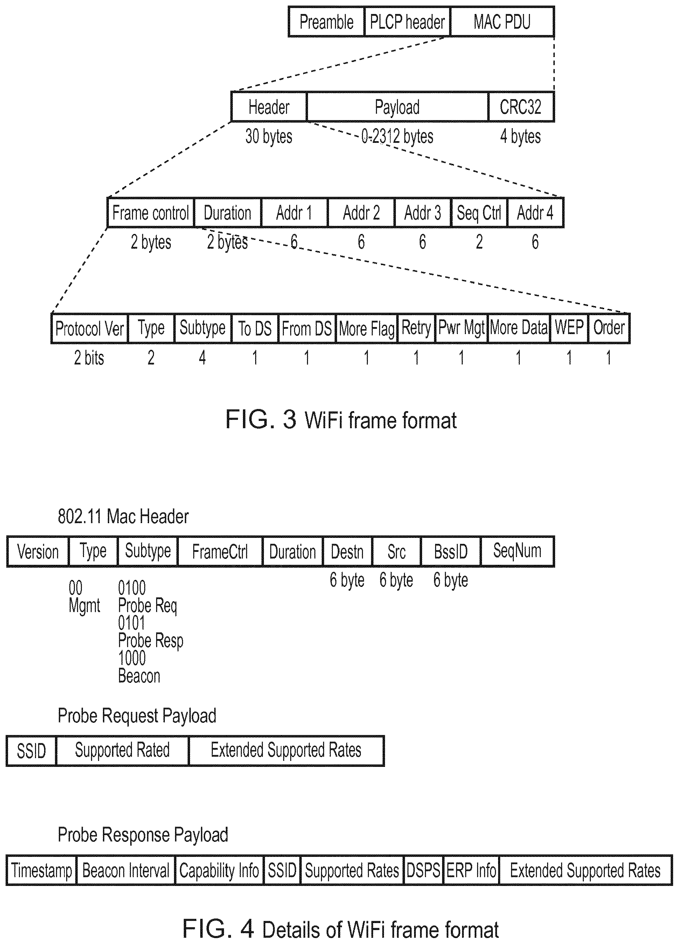

Figure 3 illustrates schematically an example Wi-Fi frame format and Figure 4 illustrates schematically in more detail a Wi-Fi frame format. Those Figures include detail about the information contained in the frame, for example, PLCP header, MAC header, and similar.

## LTE node processing stage

Based on load information retrieved by the LTE node when sniffing/decoding Wi-Fi frames, the LTE node $u$ may be operable to compute, for example, Wi-Fi network short-term average traffic load density:

$$Q_n^{\text{WiFi}}[\text{bit}] = \sum_{w=1}^{W} \sum_{u=1}^{U_w^{\text{WIFI}}} \omega_{w,u}^{\text{WiFi}}[\text{bit}],$$

where $\omega_{w,u}^{\text{WiFi}}$ is the short-term average traffic load of UE u connected to WiFi node w and computed over a given observation time $t^{\text{OBS}}$.

The LTE node may be operable to retrieve analogous cellular network information in relation to its own DL, $Q_n^{\text{LTE,DL}}$, and UL, $Q_n^{\text{LTE,UL}}$ by looking at its own traffic data buffers and traffic statistics.

Based on the information: $Q_n^{\text{WiFi}}$, $Q_n^{\text{LTE,DL}}$ and $Q_n^{\text{LTE,UL}}$; an LTE node may be operable to compute an appropriate sharing channel time between the LTE network and the Wi-Fi network.

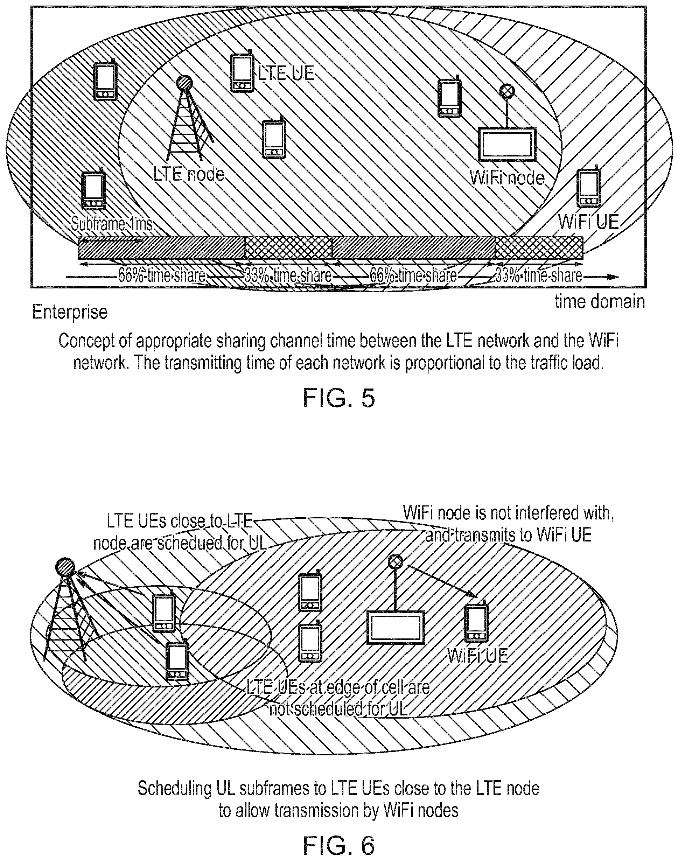

Figure 5 illustrates schematically one possible arrangement to share common channel time between an LTE network and a Wi-Fi network in which transmitting time of each network is proportional to associated network traffic load. In other words, an LTE node may in general operate to compute a ratio of time Q in which it should offer some help to the Wi-Fi network.

$$Q = \frac{Q_n^{\mathrm{WiFi}}[\mathrm{bit}]}{Q_n^{\mathrm{LTE,DL}}[\mathrm{bit}] + Q_n^{\mathrm{LTE,UL}}[\mathrm{bit}]}$$

In the example scenario shown in Figure 1, assuming that all UEs have the same short-term average traffic load and that a fair sharing scheme giving equal weights to both technologies is used, the LTE network should benefit from use of the shared channel for double the time allocated to the Wi-Fi network. This is because the LTE network has double the number of UEs and thus double the short-term average traffic load.

It will be appreciated that traffic load could be defined in accordance with various metrics: such as number of UEs per node, number of bits transmitted in a unit of time, percentage of time in which the channel is busy and similar. Moreover the "fair" sharing time computation can be performed using different cost functions, for example, weighted sharing, etc.

## LTE node dynamic TDD configuration

In order to further enhance cellular and non-cellular network coexistence, in some arrangements the LTE node may be operable to schedule LTE UL subframes instead of LTE DL subframes using the shared channel. That scheduling may occur within the time share arrangement or may occur intelligently across both cellular and non-cellular usage slots. Such arrangements recognise that LTE UL subframes provide a much lower interference to neighbouring nodes than LTE DL subframes. Such an arrangement offer more efficient shared channel usage in comparison to blanking approaches, since some LTE UL traffic can be carried out, even outside "fair share" time slots.

A dynamic TDD scheduler at the LTE node, which is in charge of deciding whether an LTE UL subframe or an LTE DL subframe is scheduled, may be operable to base decisions on LTE traffic and also offer help to the Wi-Fi network in a number of subframes, thus enhancing network coexistence.

One example of such a Wi-Fi-aware LTE dynamic TDD scheduler can operate as follows: The scheduling algorithm may run independently and on a regular basis at each LTE node (for example, every 10 subframes) and may be configured to decide whether an LTE UL subframe or an LTE DL subframe should be scheduled in a given dynamic TDD subframe. The optimization objective implemented by the scheduler may be to minimize the difference between the UL and the DL short-term average traffic buffer densities at the LTE node. In other words, the scheduler may implement a scheme which seeks to balance DL/UL performance while meeting the LTE and Wi-Fi coexistence requirements.

The LTE DL/UL short-term average traffic buffer densities may be defined as the sum of UEs' DL/UL short-term average traffic buffer loads over the quantity of available time/ subframes to transmit such traffic. In more detail, the LTE DL/UL short-term average traffic buffer densities, $d_n^{\mathrm{LTE,DL}}$ and $d_n^{\mathrm{LTE,UL}}$, of LTE node $n$ can be respectively defined as:

$$d_n^{\mathrm{LTE,UL}}[\mathrm{bps}] = \frac{Q_n^{\mathrm{LTE,UL}}}{t} = \frac{\sum_{u=0}^{U} \omega_{n,u}^{\mathrm{UL}}}{t}$$

$$d_n^{\mathrm{LTE,DL}}[\mathrm{bps}] = \frac{Q_n^{\mathrm{LTE,DL}}}{T-t} = \frac{\sum_{u=0}^{U} \omega_{n,u}^{\mathrm{DL}}}{T-t}$$

where $\omega_{n,u}^{\mathrm{DL}}$ and $\omega_{n,u}^{\mathrm{UL}}$ are DL/UL short-term average traffic load of UE u connected to LTE node $n$, $T$ is the time expand of the total number of available subframes in the scheduling period, and t is the time expand of the number of available UL subframes in the T subframes.

Then, with respect to minimizing the difference between the DL and the UL short-term average traffic buffer densities in the LTE node, while meeting the LTE and WiFi coexistence requirements, the optimal number of dynamic TDD UL subframes in $T$ subframes for small cell $n$ is selected from

$$t_n^{\text{opt}} = \min_{r \in Y} \left\{ \left| d_n^{\text{LTE,DL}}\big(g(r)\big) - \max\ \Big( d_n^{\text{LTE,UL}}\big(g(r)\big), d_n^{\text{WiFi}}\big(g(r)\big) \Big) \right| \right\} (1)$$

subject to

$$\frac{d_n^{\text{WiFi}}(g(r))}{d_n^{\text{LTE,UL}}(g(r)) + d_n^{\text{LTE,DL}}(g(r))} \approx \alpha Q \ (2)$$

where Y is the set of all available TDD configurations in the standard, $r$ is one specific TDD configuration, and $g(r)$ extracts the number of UL subframes in $T$ subframes from the TDD configuration $r$. $\alpha \in [0, 1/Q]$ is a parameter that may be used by the operator to trade LTE by Wi-Fi performance. A value of $\alpha = 0$ results in an operation mode where the Wi-Fi network is completely ignored by the LTE system, and thus no extra UL subframes are offered from the LTE network to the Wi-Fi network. A value of $\alpha = 1$ results in an operation mode where the LTE node gives to Wi-Fi network the estimated number of LTE subframes to meet the coexistence requirement, despite of damaging its own LTE DL performance.

The function $g(r)$ may not be limited to integer values since in practical systems certain special subframes consist of DL symbols, UL symbols and a transition interval between the DL and the UL symbols. The proportion of these three parts depends on the specific TDD configuration $r$.

Other scheduling strategies may be used.

**LTE node UL scheduling**

Since the level of interference generated by an LTE UL sub-frame will typically depend upon the distance from a UE allocated that UL sub-frame to the LTE node (due to UL power control within a cellular network) an LTE control node may operate to schedule some or all "cell-centre" UEs in specific UL subframes to enhance network coexistence. Such arrangements can result in a decrease in inter-RAT interference in those specific UL subframes.

Such an approach may provide a large interference migration that allows coexistence between the LTE and WiFi networks and, since resources do not need to be blanked, may avoid, to some extent, wasting available resource. Such arrangements recognise that interference generated by such specific scheduled UL subframes is mitigated since it typically only contains cell centre UL traffic. Cell centre UE typically transmit at a low transmit power due to their proximity to the serving node. When this type of subframe is scheduled, a Wi-Fi network may determine that, despite cellular network traffic on the shared channel, more transmission possibilities exist. Figure 6 illustrates schematically an arrangement in which uplink (UL) sub-frames are scheduled to LTE user equipment (UEs) close to a LTE node to allow transmissions made by Wi-Fi nodes.

**Wi-Fi Frame Decoding**

Arrangements described above are such that an LTE node has the capability to decode Wi-Fi PLCP and MAC headers. Whilst that can provide a large amount of information to an LTE node, it may introduce additional complexity to hardware and software implementation at the LTE node. Alternative arrangements may be provided in which an LTE node has no specific capability to decode Wi-Fi PLCP and MAC headers.

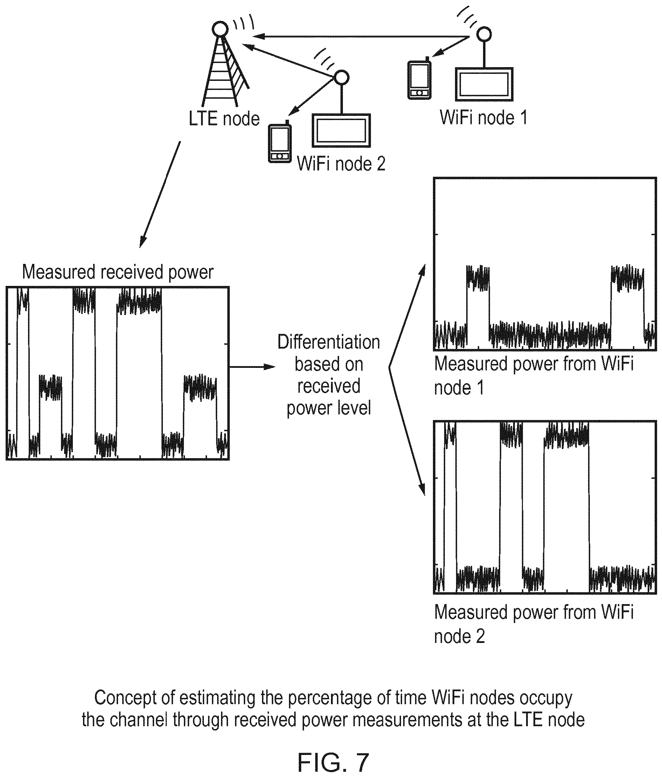

Figure 7 illustrates schematically a method of estimating a percentage of time Wi-Fi nodes occupy a shared channel by monitoring received power measurements at a LTE node. As shown in Figure 7, an LTE node may be configured to measure received power in the shared unlicensed frequency spectrum used by Wi-Fi nodes. In the example shown there are two Wi-Fi nodes. Since the Wi-Fi nodes are not co-located, the received powers at the LTE node from the two Wi-Fi nodes are at different power levels. Based on this property, the times at which Wi-Fi node 1 and node 2 are transmitting can be differentiated. This may allow an LTE node to estimate the percentage of time in which the Wi-Fi nodes occupy the shared channel, which can be used as an alternative metric when determining the load of Wi-Fi nodes as discussed in relation to earlier arrangements.

While such an approach may not typically give an LTE node detailed information regarding the load of the Wi-Fi nodes in terms of, for example, number of bits transmitted, and there is a probability of inaccurate estimations if the Wi-Fi nodes are mobile or have similar transmit powers and are located very close to each other, it can provide general information of Wi-Fi node load without the need to implement a means to decode Wi-Fi signals at the LTE node.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method performed at a base station providing radio coverage within a cell of a cellular wireless communication network, said method comprising:

   prior to scheduling cellular traffic within a frequency band used by at least one access point located within said cell and supporting non-cellular wireless communication, determining an indication of operational characteristics of said at least one access point within said cell;
   assessing, based on a comparison of said determined operational characteristics of said at least one access point within said cell with operational characteristics of said base station providing said radio coverage within said cell, a proportion of time that said frequency band may be used by said base station;
   scheduling transmission of said cellular traffic in said frequency band in accordance with said assessed proportion of time, **characterised by**:

   calculating, from said determined operational characteristics of said at least one access point within said cell, an indication of proximity of said at least one access point to said base station; and
   scheduling uplink cellular traffic in said frequency band from user equipment assessed to be closer to said base station than said calculated indication of proximity.

2. A method according to claim 1, wherein said determined operational characteristics of said at least one access point within said cell comprise one or more of:
   an indication of a number of said at least one access points within said radio coverage of said cellular base station; an indication of a number of non-cellular user equipment associated with each said at least one access point; an indication of one or more non-cellular traffic characteristics.

3. A method according to claim 1 or claim 2, wherein said determined operational characteristics of said at least one access point within said cell comprise: an indication of non-cellular traffic load.

4. A method according to any preceding claim, wherein said determined operational characteristics of said base station comprise one or more of: an indication of a number of user equipment within said radio coverage of said cellular base station; an indication of uplink cellular traffic; an indication of downlink cellular traffic.

5. A method according to any preceding claim, wherein said determined operational characteristics of said base station comprises an indication of cellular traffic load.

**6.** A method according to any preceding claim, wherein said assessing a proportion of time that said frequency band may be used by said base station comprises: calculating an appropriate sharing time according to one or more of: a ratio of averages of respective determined indications of cellular and non-cellular traffic load density; a ratio of cellular and non-cellular user equipment; a ratio of cellular and non-cellular traffic bits transmitted per unit of time; a determined average percentage of time said non-cellular communication occurs within said frequency band.

**7.** A method according to any preceding claim, wherein said assessing a proportion of time that said frequency band may be used by said base station comprises: equally weighting cellular communication and said non-cellular communication.

**8.** A method according to any preceding claim, comprising monitoring to see if the bandwidth is in use prior to scheduling cellular traffic using said bandwidth.

**9.** A method according to any preceding claim, wherein determining an indication of operational characteristics of said at least one access point within said cell comprises: intercepting and decoding non-cellular wireless communication.

**10.** A method according to any preceding claim, wherein determining an indication of operational characteristics of said at least one access point within said cell comprises: monitoring said frequency band at said base station for an indication of non-cellular wireless communication.

**11.** A method according to any preceding claim, comprising selecting a downlink to uplink subframe ratio to be used for said scheduling in accordance with said assessed proportion of time.

**12.** A method according to any preceding claim, comprising scheduling a cellular uplink or downlink subframe in dependence upon selection criteria which operate to balance cellular uplink and downlink performance.

**13.** A computer program product operable, when executed on a computer, to perform the method of any one of claims 1 to 12,

**14.** A base station configured to provide radio coverage within a cell of a cellular wireless communication network, said base station comprising:

> determination logic configured to determine an indication of operational characteristics of at least one access point within said cell, prior to scheduling cellular traffic within a frequency band used by said at least one access point located within said cell, that access point being configured to support non-cellular wireless communication;
> assessment logic operable to assess, based on a comparison of said determined operational characteristics of said at least one access point within said cell with operational characteristics of said base station providing said radio coverage within said cell, a proportion of time that said frequency band may be used by said base station; and
> a scheduler configured to use said frequency band for transmission of said cellular traffic in accordance with said assessed proportion of time; and
> a calculator configured to calculate, from the determined operational characteristics of at least one access point within the cell, an indication of proximity of the at least one access point to the base station;
> said scheduler being configured to schedule uplink cellular traffic in the frequency band from user equipment assessed to be closer to the base station than the calculated indication of proximity.

**Patentansprüche**

**1.** Verfahren, welches bei einer Basisstation durchgeführt wird, welche eine Funkabdeckung innerhalb einer Zelle eines zellularen drahtlosen Kommunikationsnetzwerks bereitstellt, wobei das Verfahren umfasst:

> vor dem Einplanen des zellularen Funkverkehrs innerhalb eines Frequenzbandes, welches von mindestens einem Zugangspunkt verwendet wird, der sich in dieser Zelle befindet und nicht-zellulare drahtlose Kommunikation unterstützt,
> Ermitteln einer Angabe zu den Betriebseigenschaften des mindestens einen Zugangspunktes innerhalb dieser Zelle;
> Abschätzen eines Zeitanteils, in welchem dieses Frequenzband von dieser Basisstation verwendet werden könnte, basierend auf einem Vergleich dieser ermittelten Betriebseigenschaften dieses mindestens einen Zugangspunktes innerhalb dieser Zelle mit Betriebseigenschaften dieser Basisstation, welche diese Funkabdeckung innerhalb dieser Zelle bereitstellt;
Einplanen der Übertragung dieses zellularen Funkverkehrs in diesem Frequenzband in Übereinstimmung mit diesem abgeschätzten Zeitanteil, **gekennzeichnet, durch**:

Errechnen, aus diesen ermittelten Betriebseigenschaften dieses mindestens einen Zugangspunktes innerhalb dieser Zelle, einer Angabe zur Nähe dieses mindestens einen Zugangspunktes zur Basisstation; und
Einplanen von zellularem Uplink Funkverkehr in diesem Frequenzband von diesem Endgerät, welches geschätzt näher zu dieser Basisstation liegt, als diese errechnete Angabe zur Nähe.

2. Verfahren nach Anspruch 1, wobei die ermittelten Betriebseigenschaften dieses mindestens einen Zugangspunktes innerhalb der Zelle einen oder mehrere der folgenden umfasst:
eine Angabe zu einer Anzahl dieser mindestens einen Zugangspunkte innerhalb dieser Funkabdeckung dieser zellularen Basisstation; eine Angabe zu einer Anzahl von nicht-zellularen Endgeräten, welche jedem dieser mindestens einen Zugangspunkte zugeordnet ist; eine Angabe zu einer oder mehrerer nicht-zellularen Funkverkehrseigenschaften.

3. Verfahren nach Anspruch 1 oder Anspruch 2, wobei diese ermittelten Betriebseigenschaften dieses mindestens einen Zugangspunktes innerhalb dieser Zelle umfassen: eine Angabe zur nicht-zellularen Funkverkehrslast.

4. Verfahren nach einem der vorhergehenden Ansprüche, wobei diese ermittelten Betriebseigenschaften dieser Basisstation eines oder mehrere der folgenden umfassen:
eine Angabe zu einer Anzahl von Endgeräten innerhalb dieser Funkabdeckung der zellularen Basisstation; eine Angabe zum zellularen Uplink-Funkverkehr; ein Angabe zum zellularen Downlink-Funkverkehr.

5. Verfahren nach einem der vorhergehenden Ansprüche, wobei diese ermittelten Betriebseigenschaften dieser Basisstation eine Angabe zur zellularen Funkverkehrslast umfassen.

6. Verfahren nach einem der vorhergehenden Ansprüche, wobei dieses Abschätzen eines Zeitanteils, in welchem dieses Frequenzband von dieser Basisstation verwendet werden könnte, umfasst: Errechnen einer geeigneten Sharing-Zeit in Übereinstimmung mit einem oder mehreren der folgenden: einem Verhältnis von Durchschnittswerten von jeweils ermittelten Angaben zur zellularen und nicht-zellularen Funkverkehrslastdichte; einem Verhältnis von zellularen und nicht-zellularen Endgeräten; einem Verhältnis von zellularen und nicht-zellularen Funkverkehr-Bits, welche pro Zeiteinheit übertragen werden; einem ermittelten durchschnittlichen Prozentsatz der Zeit, in welcher diese nicht-zellulare Kommunikation innerhalb dieses Frequenzbandes stattfindet.

7. Verfahren nach einem der vorhergehenden Ansprüche, wobei dieses Abschätzen eines Zeitanteils, in welcher dieses Frequenzband von dieser Basisstation verwendet werden könnte, umfasst: gleiches Gewichten der zellularen Kommunikation und dieser nicht-zellularen Kommunikation.

8. Verfahren nach einem der vorhergehenden Ansprüche, umfassend ein Überwachen, um zu sehen, ob die Bandbreite, welche vor dem Einplanen von zellularem Funkverkehr, der diese Bandbreite verwendet, verwendet wird.

9. Verfahren nach einem der vorhergehenden Ansprüche, wobei das Ermitteln einer Angabe zu Betriebseigenschaften dieses mindestens einen Zugangspunktes innerhalb dieser Zelle umfasst: Abfangen und Decodieren von nicht-zellularer drahtloser Kommunikation.

10. Verfahren nach einem der vorhergehenden Ansprüche, wobei das Ermitteln einer Angabe zu Betriebseigenschaften des mindestens einen Zugangspunktes innerhalb dieser Zelle umfasst: Überwachen dieses Frequenzbandes an der Basisstation zu einer Angabe von nicht-zellularer drahtloser Kommunikation.

11. Verfahren nach einem der vorhergehenden Ansprüche, umfassend das Auswählen eines Downlink-zu-Uplink Subframe-Verhältnisses, welches, in Übereinstimmung mit diesem abgeschätzten Zeitanteil, für dieses Einplanen verwendet werden soll.

12. Verfahren nach einem der vorhergehenden Ansprüche, umfassend das Einplanen eines zellularen Uplink- oder Downlink-Subframes in Abhängigkeit von Auswahlkriterien, welche bewirken, dass die zellulare Uplink- und Downlink-Leistung ausbalanciert wird.

13. Computerprogrammprodukt, welches, wenn es auf einem Computer ausgeführt wird, wirksam ist, um das Verfahren nach einem der Ansprüche 1 bis 12 auszuführen.

14. Basisstation, die konfiguriert ist, um eine Funkabdeckung innerhalb einer Zelle eines zellularen drahtlosen Kommunikationsnetzwerks bereitzustellen, wobei die Basisstation umfasst:

eine Ermittlungslogik, die konfiguriert ist, um vor der Einplanung des zellularen Funkverkehrs innerhalb eines Frequenzbandes, welches von dem mindestens einen Zugangspunkt verwendet wird, der sich in dieser Zelle befindet, wobei dieser Zugangspunkt konfiguriert ist, um nicht-zellulare drahtlose Kommunikation zu unterstützen, eine Angabe zu Betriebseigenschaften von mindestens einem Zugangspunkt innerhalb dieser Zelle zu ermitteln;

eine Abschätzungslogik, die geeignet ist, um einen Zeitanteil dieses Frequenzbandes, in welchem dieses von dieser Basisstation verwendet werden könnte, einzuschätzen,

basierend auf einem Vergleich dieser ermittelten Betriebseigenschaften dieses mindestens einen Zugangspunktes innerhalb dieser Zelle mit Betriebseigenschaften dieser Basisstation, die diese Funkabdeckung innerhalb dieser Zelle bereitstellt; und

einen Planer, der konfiguriert ist, um dieses Frequenzband zur Übertragung dieses zellularen Funkverkehrs in Übereinstimmung mit diesem abgeschätzten Zeitanteil zu verwenden; und

einen Rechner, der konfiguriert ist, um, aus diesen ermittelten Betriebseigenschaften dieses mindestens einen Zugangspunktes innerhalb der Zelle, eine Angabe zur Nähe dieses mindestens einen Zugangspunktes zur Basisstation zu errechnen;

wobei dieser Planer konfiguriert ist, um zellularen Uplink-Funkverkehr in dem Frequenzband dieses Endgerätes, welches geschätzt näher zu der Basisstation liegt, als die errechnete Angabe zur Nähe, einzuplanen.

## Revendications

1. Procédé mis en œuvre au niveau d'une station de base fournissant :
de la couverture radio au sein d'une cellule d'un réseau de communication sans fil cellulaire, ledit procédé comprenant :

avant l'ordonnancement de trafic cellulaire au sein d'une bande de fréquences utilisée par au moins un point d'accès situé dans ladite cellule et supportant une communication non-cellulaire sans fil, le calcul d'un indicateur de caractéristiques opérationnelles dudit au moins un point d'accès dans ladite cellule ;

l'analyse, sur la base d'une comparaison desdites caractéristiques opérationnelles calculées dudit au moins un point d'accès dans ladite cellule présentant des caractéristiques opérationnelles de ladite station de base fournissant ladite couverture radio au sein de ladite cellule, d'une proportion du temps pendant lequel ladite bande de fréquences peut être utilisée par ladite station de base ;

l'ordonnancement de la transmission dudit trafic cellulaire dans ladite bande de fréquences conformément à ladite analyse de proportion de temps, **caractérisé par** :

le calcul, à partir desdites caractéristiques opérationnelles calculées dudit au moins un point d'accès dans ladite cellule, d'une indication de proximité dudit au moins un point d'accès à ladite station de base ; et

l'ordonnancement de trafic cellulaire montant dans ladite bande de fréquence à partir d'équipement utilisateur calculé comme étant plus proche de la station de base que ladite indication de proximité calculée.

2. Procédé selon la revendication 1, selon lequel lesdites caractéristiques opérationnelles calculées dudit au moins un point d'accès dans ladite cellule comprend l'une ou plusieurs parmi :

une indication d'un nombre dudit au moins un point d'accès dans ladite couverture radio de ladite station de base cellulaire ;

une indication d'un nombre d'équipement non-cellulaire associé à chacun dudit au moins un point d'accès ;

une indication d'une ou plusieurs caractéristiques de trafic non-cellulaire.

3. Procédé selon la revendication 1 ou la revendication 2, selon lequel lesdites caractéristiques opérationnelles calculées dudit au moins un point d'accès dans ladite cellule comprennent une indication de charge de trafic non-cellulaire.

4. Procédé selon l'une quelconque des revendications précédentes, selon lequel lesdites caractéristiques opérationnelles de ladite station de base comprennent une ou plusieurs caractéristiques parmi :

une indication d'un nombre d'équipement utilisateur dans ladite couverture radio de ladite station de base cellulaire ;
une indication de trafic cellulaire montant ;
une indication de trafic cellulaire descendant.

5. Procédé selon l'une quelconque des revendications précédentes, selon lequel lesdites caractéristiques opérationnelles de ladite station de base comprennent une indication de charge de trafic cellulaire.

6. Procédé selon l'une quelconque des revendications précédentes, selon lequel ladite analyse d'une proportion de temps pendant lequel ladite bande de fréquence peut être utilisée par ladite station de base comprend :
le calcul d'un temps de partage approprié conformément à l'un ou plusieurs parmi :

un rapport de moyennes d'indications calculées respectives de densité de charge de trafic cellulaire et non-cellulaire ;
un rapport d'équipement utilisateur cellulaire et non-cellulaire ;
un rapport de bits de trafic cellulaire et non-cellulaire transmis par unité de temps ;
un pourcentage moyen calculé du temps que ladite communication non-cellulaire s'effectue dans ladite bande de fréquences.

7. Procédé selon l'une quelconque des revendications précédentes, selon lequel ladite analyse d'une proportion de temps pendant lequel ladite bande de fréquence peut être utilisée par ladite station de base comprend la pondération égale de la communication cellulaire et ladite communication non-cellulaire.

8. Procédé selon l'une quelconque des revendications précédentes, comprenant de la surveillance pour constater si la bande passante est en cours d'utilisation avant d'ordonnancer le trafic cellulaire utilisant ladite bande passante.

9. Procédé selon l'une quelconque des revendications précédentes, selon lequel le calcul d'une indication de caractéristiques opérationnelles dudit au moins un point d'accès dans ladite cellule comprend l'interception et le décodage de la communication sans fil non-cellulaire.

10. Procédé selon l'une quelconque des revendications précédentes, selon lequel le calcul d'une indication de caractéristiques opérationnelles dudit au moins un point d'accès dans ladite cellule comprend la surveillance de ladite bande de fréquences au niveau de la station de base d'une indication de communication sans fil non-cellulaire.

11. Procédé selon l'une quelconque des revendications précédentes, comprenant la sélection d'un rapport de sous-trame de liaison descendante/montante afin de l'appliquer audit ordonnancement conformément à ladite proportion de temps analysée.

12. Procédé selon l'une quelconque des revendications précédentes, comprenant l'ordonnancement d'une sous-trame cellulaire montante ou descendante en fonction de critères de sélection ayant pour effet d'équilibrer la performance cellulaire montante et descendante.

13. Produit de programme d'ordinateur opérable, lorsqu'il est exécuté par un ordinateur, pour effectuer la mise en œuvre du procédé selon l'une quelconque des revendications 1 à 12.

14. Station de base configurée pour fournir de la couverture radio au sein d'une cellule d'un réseau de communication cellulaire sans fil, ladite station de base comprenant ;
de la logique de calcul configurée pour calculer une indication de caractéristiques opérationnelles d'au moins un point d'accès dans ladite cellule, avant d'ordonnancer du trafic cellulaire dans une bande de fréquences utilisée par ledit au moins un point d'accès situé dans ladite cellule, ce point d'accès étant configuré pour supporter de la communication non-cellulaire sans fil ;
de la logique d'analyse opérable pour analyser, sur la base d'une comparaison desdites caractéristiques opérationnelles calculées dudit au moins un point d'accès dans ladite cellule présentant des caractéristiques opérationnelles de ladite station de base fournissant ladite couverture radio au sein de ladite cellule, d'une proportion du temps pendant lequel ladite bande de fréquences peut être utilisée par ladite station de base ; et

un ordonnanceur configuré pour utiliser ladite bande de fréquences pour de la transmission dudit trafic cellulaire conformément à ladite analyse de proportion de temps ; et

un calculateur configuré pour calculer, à partir desdites caractéristiques opérationnelles calculées dudit au moins un point d'accès dans ladite cellule, d'une indication de proximité dudit au moins un point d'accès à ladite station de base ;

ledit ordonnanceur étant configuré pour ordonnancer du trafic cellulaire montant dans ladite bande de fréquence à partir d'équipement utilisateur calculé comme étant plus proche de la station de base que ladite indication de proximité calculée.

LTE and WiFi co-existence scenario

FIG. 1

LTE node sniffing WiFi frames

FIG. 2

| Preamble | PLCP header | MAC PDU |
|---|---|---|

| Header | Payload | CRC32 |
|---|---|---|
| 30 bytes | 0-2312 bytes | 4 bytes |

| Frame control | Duration | Addr 1 | Addr 2 | Addr 3 | Seq Ctrl | Addr 4 |
|---|---|---|---|---|---|---|
| 2 bytes | 2 bytes | 6 | 6 | 6 | 2 | 6 |

| Protocol Ver | Type | Subtype | To DS | From DS | More Flag | Retry | Pwr Mgt | More Data | WEP | Order |
|---|---|---|---|---|---|---|---|---|---|---|
| 2 bits | 2 | 4 | 1 | 1 | 1 | 1 | 1 | 1 | 1 | 1 |

FIG. 3 WiFi frame format

802.11 Mac Header

| Version | Type | Subtype | FrameCtrl | Duration | Destn | Src | BssID | SeqNum |
|---|---|---|---|---|---|---|---|---|
| | | | | | 6 byte | 6 byte | 6 byte | |

00  0100
Mgmt Probe Req
0101
Probe Resp
1000
Beacon

Probe Request Payload

| SSID | Supported Rated | Extended Supported Rates |
|---|---|---|

Probe Response Payload

| Timestamp | Beacon Interval | Capability Info | SSID | Supported Rates | DSPS | ERP Info | Extended Supported Rates |
|---|---|---|---|---|---|---|---|

FIG. 4 Details of WiFi frame format

Concept of appropriate sharing channel time between the LTE network and the WiFi network. The transmitting time of each network is proportional to the traffic load.

FIG. 5

Scheduling UL subframes to LTE UEs close to the LTE node to allow transmission by WiFi nodes

FIG. 6

Concept of estimating the percentage of time WiFi nodes occupy
the channel through received power measurements at the LTE node

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130201884 A
- US 2013208587 A